# EUROPEAN PATENT APPLICATION

(11) **EP 1 933 446 A1**
(43) Date of publication of application: **18.06.2008**
(21) Application number: 06425832.0
(22) Date of filing: 12.12.2006
(51) Int. Cl.: H02K 53/00

(54) **Generation of power at continuous cycle for universal employ**

(71) Applicant: Mularoni, Luciano, 47031 San Marino (SM)
(72) Inventor: Mularoni, Luciano, 47031 San Marino (SM)
(74) Representative: Paolini, Elena

(57) **Abstract**

It consists of a collector with brushes (19) onto the shaft of the power generator that gives power to a terminal board (20) while on line (21) power is given to the user (15) and on line (22) the power reaches an additional battery (24) through diodes (23) so to increase the voltage to the motor (3). On the shaft where the collector with brushes (25) is placed are present devices (26) from which the alternating power is taken by means of the brushes (25) in contact with the brass rings (17) connected to the blades of the collector and, by adduction line (27), to the transformers and in connection to the batteries (1).

## Description

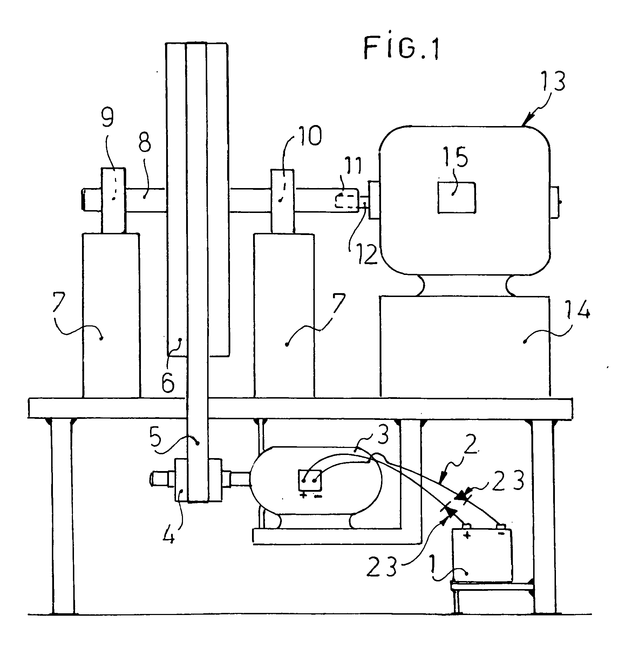

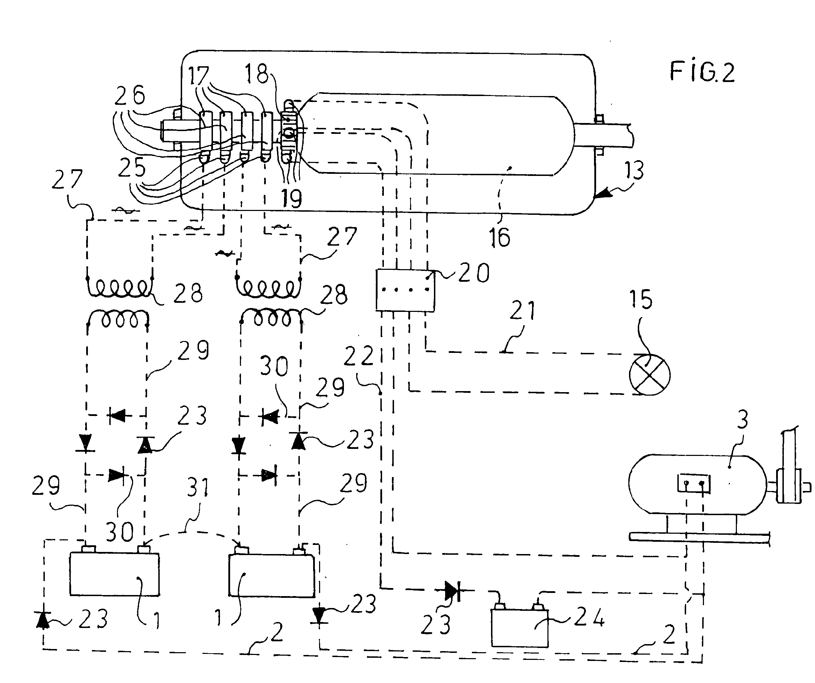

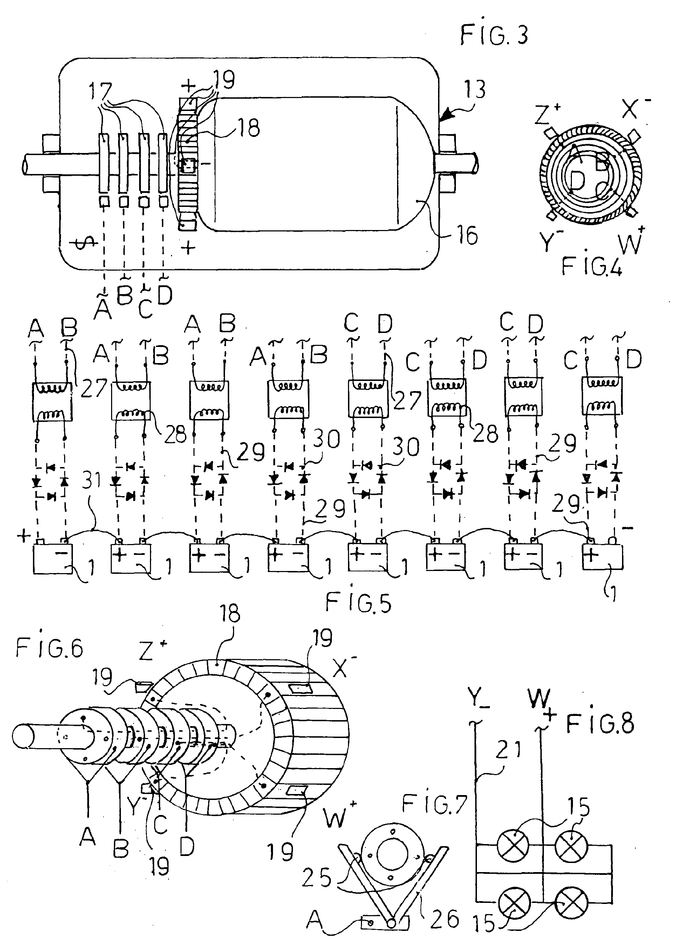

The invention refers to a mechanical generator of electric power. Said generator can be started by a battery or other source and it is able, afterward, to supply self-feeding and to produce other power. The invented generator is suitable for universal employ and particularly for the engine vehicles industry, for the machine-tools, for working machines and power generators for civil and universal uses. Said generator consists of a mechanical part providing the use of a flywheel and of a part comprising electric components. In the previous art devices are known that provide the use of mechanical components such as flywheels for the electric power production. However, said devices do not reach the working order of the invented generator where the mechanical energy of the flywheel is different used from the electrical components, on the base of new cycles and new application methods. The invented generator provides the beginning taking of power from a battery to permit the starting of a motor with starting effect. By a pulley said motor drives a flywheel of particular weight the shaft of which, placed on bearings, coaxially engages the shaft of a power generator, on the base of known art, but necessary to introduce the innovations characterizing the invented generator. It is known, moreover, that in the motion prosecution the force of drive transmitted to the flywheel is directly proportional to its weight. This condition permits to dimension the flywheel shape to be used to make it pertinent with acceptable prevalence values on the retention effect given to the generator onto which the flywheel shaft is engaged. In this way the continuous cycle permits the delivery of strengthened power, by the sending on line of the direct current in excess to the user, whereas other direct current line helps the motor to give it more speed and to keep constant the motor angular speed. Other two lines , in alternating current, are to be used for current recharge to the batteries for the continuity of the flywheel motion. The generator is created in such a way to determine a perfect balance of the powers between them that permits the taking of the power and the contemporary recharge of the batteries, where said powers through the flywheel are distributed again in the cycle so permitting the balance between the powers. The realization consists to divide the brushes on the collector of the electric enerator in four elements placed to equal distance between them. Moreover, onto the rotor shaft are placed four rings near the collector to have two alternating voltages equal between them and balanced. In particular the alternating current is obtained connected in symmetry four of the blades of the collector to the four rings. Said alternating voltage by means of transformers permits to recharge the batteries crossing diodes. The invented generator created on the base of what described in the description and in the following claims is illustrated in a merely and not limiting way in the drawings of sheets 1, 2 and 3. In sheet 1 figure 1 is synthesis view of the mechanical generator of electric power with adduction line that gives electric power to a motor, placed in correspondence with a flywheel. By pulley and drive belt said motor starts the flywheel on bearings placed on a fork. Always in figure 1 is illustrated also the rotate shaft of the flywheel that drives coaxially the direct-current generator shaft placed on a base. In sheet 2 figure 2 is view of the connection scheme of the electric parts. In sheet 3 figure 3 is lateral view of an other scheme of the alternating current connections, following transformed in direct current by means of transformers and diodes for the recharge of the batteries. Figure 4 is transversal view of the connections in symmetry of the blades of the collector with the components generating alternating current, where each blade is connected to a ring of the rotor shaft in biunique way. Figure 5 is schematic view of the recharge lines of the batteries. Figure 6 is perspective schematic view of the collector with the devices to have alternating current. Figure 7 is frontal view to a device for producing alternating current consisting of brushes placed in contact onto the four rings of the motor shaft. Figure 8 is schematic view of the electric lines for uses outside the generator . In a preferred embodiment, but not the only one, the invented generator provides fromm the battery 1, by means of adduction line 2 and diodes, the feeding of the motor 3. Said motor 3, by a pulley 4 transmitting the motion with a belt 5, puts in rotation a flywheel 6, placed on fork 7, by shaft 8 engaged on the pair of bearings 9 and 10. The shaft 8 puts in rotation on the coaxial clutch 11 the shaft 12 of the power generator 13, positioned on a base 14. The direct power in first phase generated reaches the user 15. In delivery phase of the electric power is provided the rotation of the inside part of the rotor 16, that has on the head brass rings 17, a collector 18 with brushes 19, that brings power onto the terminal board 20, while on line 21 the direct current is carried to the user and on line 22 the power reaches a battery by crossing of the power through diodes 23, to avoid the passing in the other way of the current. An additional battery 24 connected to the line 22 has the work to increase the tension to the motor 3 so to make it constantly rotates and to keep the balance of the powers to generate. The brushes 25 of the ring placed onto the rotor shaft in contact with the devices 26 give alternating tension and, by adduction line 27, the tension is connected to the transformers 28. Said transformers reduce the voltage in low tension that crossing through the diodes recharges the batteries used to keep the motion of the motor. The transformers 28 are connected to the batteries by means of electric line 29 and diodes bridge circuit 30. Said circuit 30 with diodes 23 is necessary to avoid the passing in the inverse way of the current. Each pair of brushes 25 is connected to a sole transformer 28 in suitable number to the batteries to recharge. By the rotation of the collector and so of the blades and by means of the connection of the brushes of the collector new magnetic fields are generated, from which two line voltages for the direct current and for the alternating power, where this last one is obtained for effect of the connection of the rings of the rotor shaft to the blades of the generator that, in this way, have the function of converter-switch. For the theorization of the invented generator is possible to say that the rotation of the flywheel stabilizes the electric power production, keeps the motion of the flywheel and permits the collecting of the surplus power to the user. The generator has a system of division of the powers balanced between them, both in direct power onto the brushes collector than in alternating power onto the rings. In the collector are present a certain number of copper blades divided in four parts equal between them. Defining with z and x the brushes of the collector placed upper to the shaft 12 and with y and w the brushes placed lower to the shaft 12 four equal tensions are obtained and four equal currents, keeping balance also between z and y and between x and w. Part of this power coming to the brushes z and x goes to the user, by means of line 21, while the other part of the power coming to the brushes y and w go to help the motor 3 by means of the battery 24 added in series. On the shaft of the generator 13 near the collector 18 the brass rings are placed connected to the blades of the collector in correspondence to the brushes. In this way the generator is transformed in converter-switch. Each ring has a correspondence connection to the blade in axial symmetric onto the collector to obtain four tensions equal between them, with said connections laterally to the collector, and placed near the brushes of the collector. From these rings alternating tension is generated, used to feed the transformers 28, equal to the number of the batteries. The transformer has the work to transform the high tension in low tension that is then transformed in direct power by means of diodes 23 placed in bridge connection. The batteries 1 are connected between them with a connection 31 actuated between opposite polarities, i.e. with series connection. The batteries 1 are so connected to the motor 3 by means of line 2 with diodes 23, placed on the base of the power direction. The transformers are connected to the pair of brushes A-B and C-D with number of transformers to be variable on the base of the number of batteries to be recharged, always keeping the balance of the electric powers between them. In the practical realization, the shape and the kind of the components, the working scheme in further realization, the materials of possible use and the utilization forms can be provided in different way.

## Claims

1. Mechanical generator of power at continuous cycle for universal employ having a battery (1) with adduction line (2) to feed a motor (3) that, by a pulley (4), transmits the motion to a belt (5) put in rotation a flywheel (6) on a fork (7), by a shaft (8) engaged on a pair of bearings (9, 10) and with the shaft (8) having a coaxial clutch (11) onto a shaft (12) of a power generator (13) positioned onto a base (14) with the electric power generated in the first phase given to a user (15), **characterized in that**
to have a collector with brushes (19) onto the shaft of the power generator that brings power to a terminal board (20) while on line (21) the power is carried to the user (15), and on line (22) the power reaches an additional battery (24) through diodes (23) so increasing the tension to the motor (3), keeping the balance of the powers to the generator and to have onto the same shaft, where is put the collector with brushes (25), devices (26) from which alternating power is taken by the brushes (25) in contact with brass rings (17) connected with the blades of the collector forming the device (26) connected to the transformers (28) by adduction line (27) and with connection to batteries (1) that permit the continuous feeding of the motor through electric line (29) and diodes bridge circuit (30), with the batteries (1) having connection (31) in series and connection by line (2) and diodes (23) to the motor (3).

2. Mechanical generator of power at continuous cycle for universal employ, as for the previous claim, **characterized in that** permits universal employ and particularly for the engine vehicles industry, for the machine-tools, for working machines and for power generators for civil uses.
